# EUROPÄISCHE PATENTSCHRIFT

(11) **EP 2 450 580 B1**
(45) Veröffentlichungstag und Bekanntmachung des Hinweises auf die Patenterteilung: **13.03.2013**
(21) Anmeldenummer: 10189948.2
(22) Anmeldetag: 04.11.2010
(51) Int. Cl.: F16B 7/18

(54) **Verbinderanordnung**
Connector assembly
Agencement de connecteur

(43) Veröffentlichungstag der Anmeldung: 09.05.2012
(73) Patentinhaber: Alcom International GmbH, 72770 Reutlingen (DE)
(72) Erfinder: Möller, Olaf, 72770 Reutlingen (DE)
(74) Vertreter: Geitz Truckenmüller Lucht

(56) Entgegenhaltungen:
- DE-U1-202005 004 374

## Beschreibung

Die vorliegende Erfindung betrifft eine Verbinderanordnung zum Verbinden zweier Profilelemente, mit einer einen Innenradius und einem zumindest abschnittsweise mit einem selbstformenden Außengewinde versehenen Außenradius aufweisenden Hülse, welcher eine Schraube unverlierbar zugeordnet ist, deren Schraubenkopf an einer Stirnseite der Hülse anschlägt.

Eine derartige Verbinderanordnung ist bereits aus der deutschen Gebrauchsmusterschrift DE 20 2004 004 741 U1 vorbekannt. Gemäß dieser Gebrauchsmusterschrift werden zwei Profilelemente dadurch miteinander verbunden, dass zunächst stirnseitig in ein erstes Profilelement ein Gewindeformverbinder eingedreht wird. Dies erfolgt dadurch, dass eine Hülse mit einem selbstformenden Gewinde in einem Stirnbereich inwändig einen mehrkantigen Abschnitt aufweist, in welchen ein Werkzeug eingreifen kann. Weil die später für die Verbindung zu dem zweiten Profilelement benötigte Schraube im Nachhinein nicht mehr in die Hülse eingeschoben werden kann, wird diese mithilfe eines Einsatzes, beispielsweise in Form eines Gummirings, in der Hülse gehalten und mit dieser gemeinsam in die Profilnut eingesetzt. Nachdem mithilfe des Werkzeugs die Hülse mit dem selbstformenden Gewinde in die Profilnut eingedreht wurde, wird die Schraube bis zum Anschlag des Schraubenkopfes in die Hülse eingeschoben, so dass ein unterer Bereich des Schraubengewindes greifbar wird. Auf diesen Abschnitt wird nun der Nutenstein als Widerlagerstück locker aufgedreht, welcher dann in die Profilnut des zweiten Profilelementes eingeschoben werden kann. Schließlich wird die Schraube zur Sicherung der Verbindung vollständig in den Nutenstein eingeschraubt, d.h. so weit, dass eine kraftschlüssige Verbindung entsteht.

Bereits durch die unverlierbare Aufnahme der Schraube mithilfe des Gummirings in der verwendeten Hülse ist eine enorme Arbeitserleichterung für den Monteur der Profilelemente geleistet, welcher nicht die Einzelteile vor Ort zusammensetzen muss und ein fortwährendes Auseinanderrutschen der einzelnen Elemente zu verhindern haben wird. Es bleibt jedoch als weiterhin separater Arbeitsschritt dem Monteur vorbehalten, nach einer Erstmontage des Gewindeformverbinders den Nutenstein händisch aufzusetzen.

Vor diesem Hintergrund liegt der vorliegenden Erfindung die Aufgabe zu Grunde, eine Verbinderanordnung zu schaffen, welche den separaten Arbeitsschritt des Hinzufügens eines Nutensteins verzichtbar werden lässt.

Gelöst wird diese Aufgabe durch eine Verbinderanordnung mit den Merkmalen des Anspruchs 1. Weitere sinnvolle Ausgestaltungen einer derartigen Verbinderanordnung können den Unteransprüchen entnommen werden.

Wie auch bereits der Gegenstand des Standes der Technik sieht der Gegenstand der Erfindung eine Hülse mit einem selbstformenden Gewinde vor, welche in die Profilnut eines Profilelementes stirnseitig eingedreht werden kann. Ebenfalls ist in der erfindungsgemäß vorgesehenen Verbinderanordnung eine vorab in die Hülse eingeführte Schraube zur Erstellung der Schraubverbindung zwischen den beiden Profilelementen vorgesehen. In Weiterbildung dieses Gegenstandes weist jedoch der erfindungsgemäße Gegenstand ein Widerlagerstück auf, welches ebenfalls in einer Vormontage auf das Schraubgewinde der Schraube zumindest teilweise aufgeschraubt ist. Das Widerlagerstück weist hierbei einen Schaft auf, welcher das zur Verbindung mit der Schraube erforderliche Innengewinde enthält. Im Außenbereich dieses Schaftes ist eine drehfest in dem Aufnahmebereich der Hülse aufzunehmende Kontur vorgesehen, mit deren Hilfe das Widerlagerstück drehfest mit der Hülse verbunden werden kann. Hierdurch ist es ermöglicht, durch eine Drehung des Widerlagerstücks die Hülse in die Profilnut des ersten Profilelementes einzudrehen, wobei im weiteren es entfallen kann, in einem separaten Arbeitsschritt nunmehr das Widerlagerstück anzubringen. Ebenfalls kann hierdurch eine zusätzlich anzuordnende Sicherungsmaßnahme etwa in Form des im Stand der Technik verwendeten Gummirings entfallen.

Damit auf das Widerlagerstück das zweite Profilelement aufgeschoben werden kann, indem das Widerlagerstück in die Profilnut des zweiten Profilelementes eingeführt wird, muss hierfür die gesamte Verbinderanordnung ein ausreichendes Spiel aufweisen. Hierfür ist es von Vorteil, dass im Falle eines zumindest teilweisen Eindrehens des Schraubengewindes in das Innengewinde des Widerlagerstücks der Abstand zwischen dem Schraubenkopf und dem Widerlagerstück größer ist, als die Länge der Hülse. Während des Eindrehens der Hülse unter Verwendung und Zwischenlage des Widerlagerstücks wird ein Druck auf das Widerlagerstück ausgeübt, welcher das Widerlagerstück fest im drehfesten Aufnahmebereich der Hülse hält. Nach Vollenden des Eindrehvorgangs kann durch einen Zug an dem Widerlagerstück dieses wieder auf Abstand zur Stirnseite der Hülse gebracht werden, um das genügende Spiel für das Einführen in die Profilnut des zweiten Profilelements zur Verfügung zu haben.

Eine Möglichkeit zum Eindrehen der Hülse mithilfe des Widerlagerstücks besteht darin, dieses von Hand oder Mithilfe einfacher Werkzeuge, wie Zangen usw. in Drehung zu versetzen. Bevorzugtermaßen weist jedoch das Widerlagerstück auf seiner idealerweise dem Schaft, in welchen die Schraube eingedreht wird, gegenüberliegenden Seite Mittel zum Eingriff für Drehwerkzeuge auf, so dass beispielsweise mithilfe eines Akku-Schraubers mit einem Torx-Bit das Widerlagerstück mitsamt der Hülse in die Profilnut des ersten Profilelements eingedreht werden kann. Hierbei stellt zudem vorteilhafter Weise das Widerlagerstück einen natürlichen Anschlag dar, so dass ein zu tiefes Eindrehen der Hülse vermieden ist. Ein zu tiefes Eindrehen der Hülse könnte dazu führen, dass die Länge der Schraube nicht mehr ausreicht, um sicher mit dem Widerlagerstück verbunden zu werden. Dies würde beim Stand der Technik in einem zusätzlichen Arbeitsschritt des wieder Herausdrehens und Anpassens der Eindrehtiefe resultieren.

Die drehfeste Aufnahme des Schafts in dem Aufnahmebereich der Hülse wird mit Vorteil mithilfe eines Mehrkantabschnittes, etwa eines Sechskantabschnittes, geleistet. Auch andere Konturen sind hierbei denkbar, so dass beispielsweise auch dieser Abschnitt als Torx-Abschnitt ausgeführt sein kann. Der Aufnahmebereich weist hierzu die entsprechende Gegenkontur auf.

Bevorzugtermaßen ist das Widerlagerstück als Hammerkopfmutter ausgestaltet, welche ihrer Form nach für ein Einführen in die Profilnut eines Profilelementes geeignet ist.

Zur besseren Einführung der Hülse in die Profilnut eines Profilelementes weist diese einen Einführabschnitt auf, welcher zunächst gewindefrei ist. Dann folgt in Richtung der dem Widerlagerstück zugewandten Stirnseite ein vorzugsweise ansteigendes, selbstformendes Gewinde, wobei diese spezielle Anordnung dabei hilfreich ist, für ein gerades Eindrehen der Hülse zu sorgen.

Zwischen dem Schraubenkopf und der diesem zugewandten Stirnseite der Hülse kann ergänzend ein Federelement angeordnet sein, beispielsweise in Form eines konzentrisch auf dem Schraubenschaft angeordneten Federrings. Dadurch wird im entspannten Zustand das Widerlagerstück in seine Eingriffsposition bezüglich des Aufnahmeabschnitts der Hülse gehalten und kann nach den Einschrauben durch ein einfaches Ziehen gegen die Federkraft in die Profilnut des anzuschraubenden zweiten Profilelements eingeführt werden.

Die vorstehend beschriebene Erfindung wird im Folgenden anhand eines Ausführungsbeispiels näher erläutert.

Es zeigen
- Figur 1: eine Verbinderanordnung in einer seitlichen Querschnitts-Explosionsdarstellung, sowie
- Figur 2: eine Hammerkopfmutter als Bestandteil der Verbinderanordnung gemäß Figur 1 in einer stirnseitigen Draufsicht.

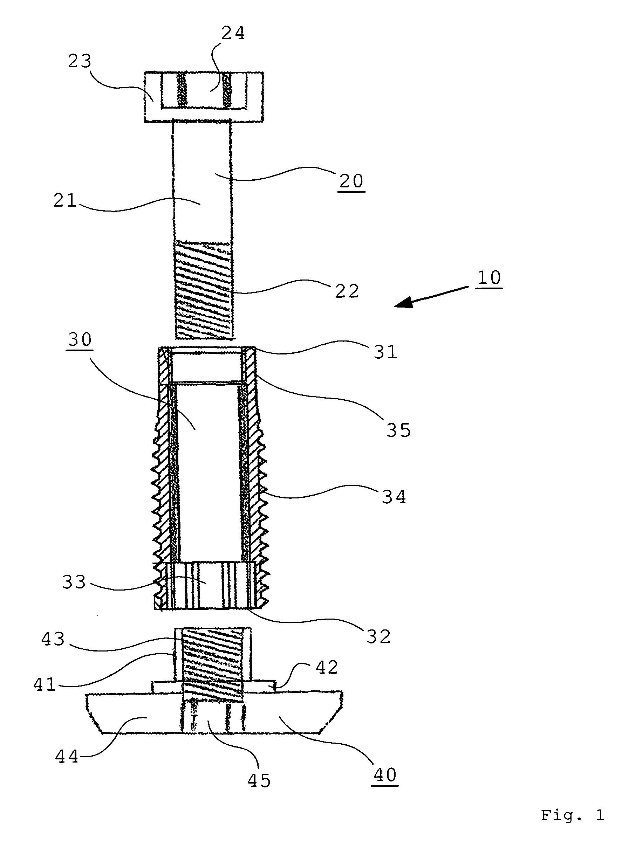

Figur 1 zeigt eine Verbinderanordnung 10 in einer Explosionsdarstellung von seitlich, wobei in Bezug auf einzelne Elemente zur besseren Verdeutlichung eine abschnittsweise Querschnittsdarstellung gewählt wurde. Die Verbinderanordnung 10 besteht hierbei aus einer Hülse 30, in welcher eine Schraube 20 im Bereich einer Stirnseite 31 eingeführt wird, welche in dem eingeführten Zustand mit einer Hammerkopfmutter 40 im Bereich einer zweiten Stirnseite 32 verbunden wird. Hierzu wird die Hammerkopfmutter mit einem Schaft 41 in einem Aufnahmeabschnitt 33 der Hülse 30 angeordnet, welcher Aufnahmeabschnitt 33 als Mehrkantabschnitt ausgeführt ist. Zu dieser Mehrkantkontur weist der Schaft 41 der Hammerkopfmutter 40 eine Gegenkontur auf, so dass durch das Aufschieben des Schafts 41 der Hammerkopfmutter 40 in den Aufnahmeabschnitt 33 im Stirnbereich der Hülse 30 eine drehfeste Verbindung zwischen Hammerkopfmutter 40 und Hülse 30 entsteht. In Längsrichtung der Hülse 30 bleiben diese und die Hammerkopfmutter 40 jedoch zunächst beweglich. Durch ein zumindest teilweises Eindrehen des Schraubengewindes 22 der Schraube 20 in ein Innengewinde 43 im Schaft 41 der Hammerkopfmutter 40 werden die Teile der Verbinderanordnung 10 unverlierbar miteinander verbunden.

Die gesamte Verbinderanordnung 10 wird als Ganzes zur Verbindung zweier Profilelemente stirnseitig in die Profilnut eines ersten Profilelementes eingedreht. Hierzu weist die Hammerkopfmutter 40 einem Torx-Abschnitt 45 auf, an welcher ein Drehwerkzeug ansetzen kann. Das hierdurch auf die Hammerkopfmutter 40 wirkende Drehmoment wird über den mehrkantartigen Schaft 41 und den Aufnahmeabschnitt 33 der Hülse 30 auf die Hülse 30 übertragen, so dass diese mithilfe eines am Außenumfang der Hülse 30 vorgesehenen, selbstformenden Außengewindes 34 stirnseitig in die Profilnut des ersten Profilelementes eingedreht werden kann. Zur Vereinfachung des geradlinigen Eindrehens der Hülse 30 in die Profilnut weist die Hülse 30 einen Einführabschnitt 35 ohne Gewinde auf, wobei das selbstformende Außengewinde 34 ausgehend von dem Einführabschnitt 35 ansteigend ausgeführt ist.

Beim Eindrehen der Verbinderanordnung 10 in die Profilnut des ersten Profilelementes weist die Hammerkopfmutter 40 im Bereich des Fußes des Schaftes 41 einen Anschlag auf, bis zu dem ein stirnseitiges Eindrehen der Verbinderanordnung 10 in die Profilnut möglich ist. Nach dem Eindrehen kann nunmehr die Hammerkopfmutter 40 durch Ziehen ein Stück von der Hülse 30 abgerückt werden, wobei der Schaft 41 noch in den Aufnahmeabschnitt 33 der Hülse 30 einragen kann, oder auch wahlweise aus diesem herausrücken kann. Die Länge der Schraube 20 ist hierbei insbesondere in Bezug auf den Schraubenschaft 21 so zu wählen, dass bei zumindest teilweisem Eindrehen der Schraube 20 in das Innengewinde 43 der Hammerkopfmutter 40 der Abstand zwischen dem Schraubenkopf 23 und dem Anschlag 42 größer ist, als die Länge der Hülse 30. Durch das so entstehende Spiel ist es möglich, ohne ein zwischendurch erforderliches Entfernen der Hammerkopfmutter 40 diese als Widerlagerstück für das zweite Profilelement zu verwenden, welches in die Profilnut dieses zweiten Profilelementes eingeschoben werden kann. Abschließend wird mithilfe eines dem Schraubenkopf 23 zugeordneten Innensechskantabschnitts 24 die Schraube 20 so mit der Hammerkopfmutter 40 verschraubt, dass die beiden Profilelemente kraftschlüssig verbunden sind.

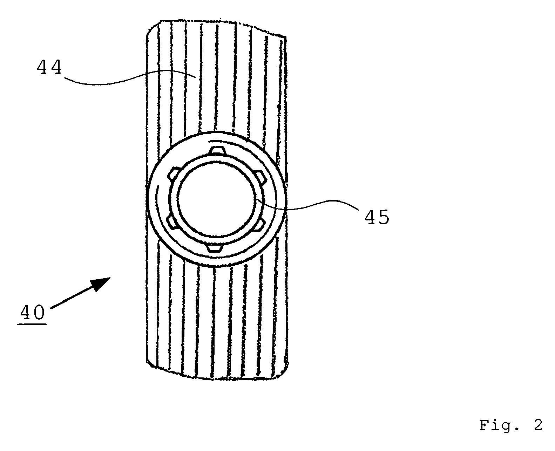

Figur 2 zeigt eine Draufsicht auf den Kopf der Hammerkopfmutter 40, welche einen Torx-Abschnitt 45 zum Eingriff durch das Werkzeug einer Drehmaschine aufweist. Der Hammerkopf 44 der Hammerkopfmutter 40 ist so geformt, dass dieser ohne weiteres in die Profilnut des zweiten Profilelementes eingeschoben und in der Art eines Nutensteins zur Bildung einer Verbindung herangezogen werden kann.

Vorstehend beschrieben ist somit eine Verbinderanordnung zur Verbindung zweier Profilelemente, welche es ermöglicht, auf den zusätzlichen Arbeitsschritt des Hinzufügens eines Nutensteins zu einer Verbinderanordnung zu verzichten. Hierzu wird anstelle eines herkömmlichen Nutensteins ein Widerlagerstück verwendet, mit dessen Hilfe das Eindrehen der Hülse der Verbinderanordnung in die Profilnut erfolgen kann. Anschließend wird das Widerlagerstück in die Profilnut des zweiten Profilelementes eingeschoben und die Verbindung durch vollständiges Anziehen der Schraube hergestellt.

### BEZUGSZEICHENLISTE

- 10: Verbinderanordnung
- 20: Schraube
- 21: Schraubenschaft
- 22: Schraubengewinde
- 23: Schraubenkopf
- 24: Innensechskantabschnitt
- 30: Hülse
- 31: Stirnseite
- 32: Stirnseite
- 33: Aufnahmeabschnitt
- 34: selbstformendes Außengewinde
- 35: Einführabschnitt
- 40: Hammerkopfmutter
- 41: Schaft
- 42: Anschlag
- 43: Innengewinde
- 44: Hammerkopf
- 45: Torx-Abschnitt

## Patentansprüche

1. Verbinderanordnung zum Verbinden zweier Profilelemente, mit einer einen Innenradius und einem zumindest abschnittsweise mit einem selbstformenden Außengewinde (34) versehenen Außenradius aufweisenden Hülse (30), welcher eine Schraube (20) unverlierbar zugeordnet ist, deren Schraubenkopf (23) an einer Stirnseite (31) der Hülse (30) anschlägt,
**dadurch gekennzeichnet, dass** ein Schraubengewinde (22) der Schraube (20) zumindest teilweise in ein Innengewinde (43) eines an der dem Schraubenkopf (23) gegenüberliegenden Stirnseite (32) der Hülse (30) angeordneten Widerlagerstücks zur Einführung in eine Profilnut eingreift, wobei ein das Innengewinde (43) aufnehmbarer Schaft (41) des Widerlagerstücks drehfest in einem Aufnahmeabschnitt (33) der Hülse (30) angeordnet ist.

2. Verbinderanordnung gemäß Anspruch 1, **dadurch gekennzeichnet, dass** bei zumindest teilweisem Eindrehen des Schraubengewindes (22) in das Innengewinde (43) des Widerlagerstücks der Abstand zwischen dem Schraubenkopf (23) und dem Widerlagerstück die Länge der Hülse (30) übersteigt.

3. Verbinderanordnung gemäß einem der Ansprüche 1 oder 2, **dadurch gekennzeichnet, dass** das Widerlagerstück, vorzugsweise dem Schaft (41) gegenüberliegend, Mittel zur Drehbetätigung durch ein Werkzeug, vorzugsweise einen Innen- oder Außenmehrkantabschnitt oder einen Torx-Abschnitt (45), aufweist.

4. Verbinderanordnung gemäß einem der vorhergehenden Ansprüche, **dadurch gekennzeichnet, dass** der Schaft (41) des Widerlagerstücks einen Außenmehrkantabschnitt aufweist, vorzugsweise einen Außensechskantabschnitt, welcher drehfest in einem Innenmehrkantabschnitt, vorzugsweise einen Innensechskantabschnitt, im Aufnahmeabschnitt (33) der Hülse aufnehmbar ist.

5. Verbinderanordnung gemäß einem der vorhergehenden Ansprüche, **dadurch gekennzeichnet, dass** das Widerlagerstück als Hammerkopfmutter (40) ausgestaltet ist.

6. Verbinderanordnung gemäß einem der vorhergehenden Ansprüche, **dadurch gekennzeichnet, dass** die Hülse (30) einen Einführabschnitt (35) zur Einführung in eine Nut eines Profilelements aufweist, an welchen sich das vorzugsweise ansteigende, selbstformende Außengewinde (34) anschließt.

7. Verbinderanordnung gemäß einem der vorhergehenden Ansprüche, **dadurch gekennzeichnet, dass** zwischen dem Schraubenkopf (23) und der dem Schraubenkopf (23) zugewandten Stirnseite (31) der Hülse (30) ein Federelement, vorzugsweise konzentrisch um den Schraubenschaft (21) herum, angeordnet ist.

8. Verbinderanordnung gemäß einem der vorhergehenden Ansprüche, **dadurch gekennzeichnet, dass** dem Schraubenkopf (23) ein Innenmehrkantabschnitt, vorzugsweise ein Innensechskantabschnitt (24), zum Eingriff durch ein Drehwerkzeug zugeordnet ist.

## Claims

1. A connector assembly for connecting two profile elements, having a sleeve (30), which has an internal radius and an external radius that is at least sectionally provided with a self-tapping outer thread (34), and to which a screw (20) is assigned in a captive manner, whose screw head (23) stops on an end side (31) of the sleeve (30),
**characterized in that** a screw thread (22) of the screw (20) engages at least partially in an inner thread (43) of a counter bearing part, which is arranged on the end side (32) of the sleeve (30) opposite to the screw head (23), for insertion into a profile groove, a shaft (41), which can receive the inner thread (43), of the counter bearing part being arranged in a rotationally fixed manner in a receptacle section (33) of the sleeve (30).

2. The connector assembly according to Claim 1, **characterized in that** when the screw thread (22) is at least partially screwed into the inner thread (43) of the counter bearing part, the distance between the screw head (23) and the counter bearing part exceeds the length of the sleeve (30).

3. The connector assembly according to one of Claims 1 or 2, **characterized in that** the counter bearing part, preferably opposite to the shaft (41), has means for rotational actuation by a tool, preferably an polygonal socket section or polygonal insert section or a Torx section (45).

4. The connector assembly according to one of the preceding claims, **characterized in that** the shaft (41) of the counter bearing part has polygonal insert section, preferably a hexagonal insert section, which is receivable in a rotationally fixed manner in a polygonal socket section, preferably a hexagonal socket section, in the receptacle section (33) of the sleeve.

5. The connector assembly according to one of the preceding claims, **characterized in that** the counter bearing part is designed as a hammerhead nut (40).

6. The connector assembly according to one of the preceding claims, **characterized in that** the sleeve (30) has an insertion section (35) for insertion into a groove of a profile element, on which the preferably ascending, self-tapping outer thread (34) adjoins.

7. The connector assembly according to one of the preceding claims, **characterized in that** a spring element is arranged, preferably concentrically around the screw shaft (21), between the screw head (23) and the end side (31) of the sleeve (30) facing toward the screw head (23).

8. The connector assembly according to one of the preceding claims, **characterized in that** a polygonal socket section, preferably a hexagonal socket section (24), for engagement by a rotating tool, is assigned to the screw head (23).

## Revendications

1. Dispositif de connecteurs pour connecter deux éléments profilés, avec une douille (30) présentant un rayon intérieur et un filet extérieur (34), autoforeur du moins par section, à qui est attribué une vis (20) de manière imperdable, dont la tête de vis (23) bute contre un côté frontal (31) de la douille (30),
**caractérisé par le fait qu'**un filet de vis (22) de la vis (20) engrène, au moins partiellement, dans un filet intérieur (43) d'une pièce de culée, se trouvant du côté opposé du côté frontal (32) de la douille (30), donc engrène pour introduction dans une rainure, où est disposé un tronc (41), logeant le filet intérieur (43), de manière résistante à la rotation dans une section de logement (33) de la douille (30).

2. Dispositif de connecteurs selon revendication 1, **caractérisé par le fait que** lors du vissage au moins partiel du filet de vis (22) dans le filet intérieur (43) de la pièce de culée la distance entre la tête de vis (23) et la pièce de culée dépasse la longueur de la douille (30).

3. Dispositif de connecteurs selon l'une des revendications 1 ou 2, **caractérisé par le fait que** la pièce de culée présente, de préférence juste en face du tronc (41), des moyens pour un actionnement rotatif par un outil, de préférence par une partie polygonale intérieure ou extérieure ou une partie Torx (45).

4. Dispositif de connecteurs selon l'une des revendications précédentes, **caractérisé par le fait que** le tronc (41) de la pièce de culée présente une partie polygonale extérieure, de préférence une partie à six pans extérieure, qui peut être logée dans une partie polygonale intérieure, de préférence une partie à six pans intérieure, dans la section de logement (33) de la douille.

5. Dispositif de connecteurs selon l'une des revendications précédentes, **caractérisé par le fait que** la pièce de culée est formée comme écrou à embase rectangulaire (40).

6. Dispositif de connecteurs selon l'une des revendications précédentes, **caractérisé par le fait que** la douille (30) présente une section d'introduction (35) pour être introduite dans la rainure d'un élément profilé, laquelle se prolonge par le filet extérieur (34), de préférence montant, autoforeur.

7. Dispositif de connecteurs selon l'une des revendications précédentes, **caractérisé par le fait qu'**entre la tête de vis (23) et le côté frontal (31) de la douille (30), tourné vers la tête de vis (23), est disposé un élément de ressort, de préférence concentriquement, autour de la tige de vis (21).

8. Dispositif de connecteurs selon l'une des revendications précédentes, **caractérisé par le fait qu'**à la tête de vis (23) est attribuée une partie polygonale intérieure, de préférence une partie à six pans intérieure (24), pour l'intervention par un outil tournant.
